# EUROPÄISCHE PATENTSCHRIFT

(11) **EP 3 734 118 B1**
(45) Veröffentlichungstag und Bekanntmachung des Hinweises auf die Patenterteilung: **07.06.2023**
(21) Anmeldenummer: 19171926.9
(22) Anmeldetag: 30.04.2019
(51) Int. Cl.: F16H 57/021, F16H 57/03, F16H 57/031, F16H 57/02, F16C 19/36, F16C 19/54

(54) **GETRIEBE MIT VORGESPANNTEN GETRIEBEGEHÄUSEWÄNDEN**
TRANSMISSION WITH PRESTRESSED TRANSMISSION HOUSING WALLS
BOÎTE DE VITESSES POURVU DE PAROIS PRÉCONTRAINTES DE CARTER DE BOÎTE DE VITESSES

(43) Veröffentlichungstag der Anmeldung: 04.11.2020
(73) Patentinhaber: Flender GmbH, 46395 Bocholt (DE)
(72) Erfinder: Döring, Andreas, 46397 Bocholt (DE)
(74) Vertreter: Michalski Hüttermann & Partner Patentanwälte mbB

(56) Entgegenhaltungen:
- EP-A1- 2 821 658
- DE-A1- 19 728 919
- DE-A1-102007 006 228
- DE-A1-102011 115 595

## Beschreibung

Die Erfindung betrifft ein Getriebe.

Getriebe sind aus dem allgemeinen Stand der Technik bereits hinlänglich bekannt. Ein solches Getriebe wird üblicherweise zur Drehmoment- und/oder Drehzahlwandlung verwendet. Hierzu weist das Getriebe üblicherweise eine Welle und ein drehfest mit der Welle verbundenes Zahnrad auf, welches in einem auch als Gehäuse bezeichneten Getriebegehäuse des Getriebes aufgenommen ist. Üblicherweise kommt es während eines Betriebs eines solchen Getriebes zu Kräften, welche über das Zahnrad und die Welle üblicherweise in das Getriebegehäuse und/oder wenigstens einen Lagerdeckel eingeleitet und dadurch abgestützt werden. Um dabei übermäßige Belastungen und somit Beschädigungen des Getriebes zu vermeiden, werden das Getriebegehäuse und der Lagerdeckel üblicherweise sehr massiv und somit gewichts- und kostenintensiv ausgeführt.

Aus EP 2 821 658 A1 ist ein Getriebe bekannt, mit einem Getriebegehäuse, welches eine in einer ersten Wand des Getriebegehäuses ausgebildete erste Öffnung und eine in einer der ersten Wand gegenüberliegenden zweiten Wand des Getriebegehäuses ausgebildete und der ersten Öffnung gegenüberliegende zweite Öffnung aufweist, mit wenigstens einer Welle, welche über eine in der ersten Öffnung angeordnete erste Lagereinrichtung und über eine in der zweiten Öffnung angeordnete zweite Lagereinrichtung drehbar an dem Getriebegehäuse gelagert ist, mit einem ersten Deckel, mittels welchem die erste Öffnung verschlossen ist, mit einem zweiten Deckel, mittels welchem die zweite Öffnung verschlossen ist, wobei der erste Deckel und der zweite Deckel mittels eines mit ihnen verschraubten Koppelelements an dem Getriebegehäuse gehalten sind, wodurch die Wände in axialer Richtung der Welle vorgespannt sind.

Aufgabe der vorliegenden Erfindung ist es daher, ein Getriebe zu schaffen, dessen Gewicht und Kosten besonders gering gehalten werden können.

Diese Aufgabe wird erfindungsgemäß durch ein Getriebe mit den Merkmalen des Patentanspruchs 1 gelöst. Vorteilhafte Ausgestaltungen mit zweckmäßigen Weiterbildungen der Erfindung sind in den übrigen Ansprüchen angegeben.

Ein erfindungsgemäßes Getriebe weist ein einfach auch als Gehäuse bezeichnetes Getriebegehäuse auf, welches eine erste Wand und eine der ersten Wand gegenüberliegende zweite Wand aufweist. Die jeweilige Wand wird auch als Gehäusewand bezeichnet. In der ersten Wand ist eine erste Öffnung des Getriebes ausgebildet, wobei in der zweiten Wand eine zweite Öffnung des Getriebes ausgebildet ist. Dabei liegen die Öffnungen einander gegenüber. Die jeweilige Öffnung ist beispielsweise eine Durchgangsöffnung, welche beispielsweise einerseits in einen auch als Aufnahmeraum oder Aufnahmebereich bezeichneten und durch das Getriebegehäuse zumindest teilweise, insbesondere zumindest überwiegend oder vollständig, begrenzten Innenraum des Getriebes und andererseits beispielsweise an eine Umgebung des Getriebegehäuses beziehungsweise des Getriebes mündet.

Das Getriebe weist darüber hinaus wenigstens eine Welle auf, welche beispielsweise mit wenigstens oder genau einem in dem Getriebegehäuse angeordneten Zahnrad drehfest verbunden sein kann. Dabei ist es denkbar, dass das Zahnrad und die Welle einstückig miteinander ausgebildet sind, oder die Welle und das Zahnrad sind separat voneinander ausgebildete und drehfest miteinander verbundene Bauelemente des Getriebes. Ferner ist es vorzugsweise vorgesehen, dass das Zahnrad in axialer Richtung und in radialer Richtung der Welle an der Welle festgelegt ist.

Das Getriebe weist darüber hinaus eine in der ersten Öffnung angeordnete Lagereinrichtung und eine in der zweiten Öffnung angeordnete zweite Lagereinrichtung auf. Die Welle ist dabei über die in der ersten Öffnung angeordnete erste Lagereinrichtung und über die in der zweiten Öffnung angeordnete zweite Lagereinrichtung drehbar an dem Getriebegehäuse gelagert, sodass die Welle und mit der Welle das Zahnrad um eine Drehachse relativ zu dem Getriebegehäuse drehbar sind. Die Drehachse fällt dabei mit der axialen Richtung der Welle zusammen und verläuft senkrecht zur radialen Richtung der Welle. Dabei liegen die Wände und die Öffnungen vorzugsweise in axialer Richtung der Welle einander gegenüber. Ferner ist es denkbar, dass die Öffnungen miteinander fluchten beziehungsweise koaxial zueinander angeordnet sind. Die Wände können einstückig miteinander ausgebildet sein, oder die Wände sind durch separat voneinander ausgebildete und zumindest mittelbar, insbesondere direkt, miteinander verbundene Gehäuseteile des Getriebegehäuses gebildet.

Das Getriebe umfasst darüber hinaus einen ersten Deckel, welcher auch als erster Lagerdeckel oder erster Gehäusedeckel bezeichnet ist. Mittels des ersten Deckels ist die erste Öffnung, insbesondere zur Umgebung des Getriebegehäuses hin, überdeckt und somit verschlossen. Das Getriebe umfasst darüber hinaus einen auch als zweiter Lagerdeckel oder zweiter Gehäusedeckel bezeichneten zweiten Deckel, mittels welchem die zweite Öffnung, insbesondere zur Umgebung des Getriebegehäuses hin, überdeckt und somit verschlossen ist. Die Deckel sind beispielsweise separat voneinander und separat von dem Gehäuse ausgebildet und an dem Getriebegehäuse gehalten.

Das Getriebe umfasst ferner ein erstes Schraubelement, mittels welchem der erste Deckel an dem Getriebegehäuse gehalten ist. Außerdem umfasst das Getriebe ein zweites Schraubelement, mittels welchem der zweite Deckel an dem Getriebegehäuse gehalten ist. Das erste Schraubelement ist beispielsweise Bestandteil einer ersten Schraubverbindung, mittels welcher der erste Deckel, insbesondere reversibel lösbar, an dem Getriebegehäuse gehalten ist. Alternativ oder zusätzlich ist das zweite Schraubelement Bestandteil einer zweiten Schraubverbindung, mittels welcher der zweite Deckel, insbesondere reversibel lösbar, an dem Getriebegehäuse gehalten ist. Das jeweilige Schraubelement ist beispielsweise als eine Schraube ausgebildet.

Das Getriebe umfasst darüber hinaus ein vorzugsweise separat von den Schraubelementen, separat von den Deckeln und separat von dem Getriebegehäuse ausgebildetes Koppelelement. Das Koppelelement kann, insbesondere in axialer Richtung der Welle, beispielsweise zwischen den Wänden und/oder zwischen den Deckeln angeordnet sein kann. Ferner ist es vorzugsweise vorgesehen, dass die Schraubelemente separat von den Deckeln, separat von dem Getriebegehäuse, separat von der Welle und separat voneinander ausgebildet sind. Die Schraubelemente sind dabei zum Halten der Deckel an dem Getriebegehäuse mit dem Koppelelement verschraubt, wodurch die Wände in axialer Richtung der Welle, insbesondere gegenseitig, vorgespannt, das heißt miteinander verspannt sind. Das erste Schraubelement ist beispielsweise in eine parallel zur axialen Richtung der Welle verlaufende und zum zweiten Schraubelement hinweisende erste Richtung, insbesondere über einen ersten Schraubenkopf des ersten Schraubelements, zumindest mittelbar, insbesondere direkt, an der ersten Wand, insbesondere an einer dem Innenraum abgewandten Seite der ersten Wand, abgestützt. Ferner ist es denkbar, dass das zweite Schraubelement in eine parallel zur axialen Richtung der Welle verlaufende, der ersten Richtung entgegengesetzte und zu dem ersten Schraubelement hinweisende zweite Richtung, insbesondere über einen zweiten Schraubenkopf des zweiten Schraubelements, an der zweiten Wand, insbesondere an einer dem Innenraum abgewandten zweiten Seite der zweite Wand, zumindest mittelbar, insbesondere direkt, abgestützt ist. Dabei sind beispielsweise die Schraubelemente in dem Innenraum beziehungsweise auf einer jeweiligen, dem Innenraum zugewandten dritten beziehungsweise vierten Seite der jeweiligen Wand mit dem Koppelelement verschraubt, wodurch die Wände in axialer Richtung der Welle miteinander verspannt, das heißt vorgespannt sind. Mit anderen Worten sind die Wände in axialer Richtung der Welle mittels der Schraubelemente und mittels des Koppelelements aufeinander zu gespannt und dadurch vorgespannt. Dadurch, dass das jeweilige Schraubelement mit dem Koppelelement verschraubt ist, wirkt von dem jeweiligen Schraubelement auf die jeweilige Wand eine Verspannkraft, welche in axialer Richtung der Welle und dabei in Richtung des jeweils anderen Schraubelements wirkt. Hierdurch sind die Wände in axialer Richtung der Welle vorgespannt. Die Schraubelemente sind dabei koaxial zueinander angeordnet beziehungsweise fluchten miteinander.

Die beschriebene Vorspannung der Wände wirkt beispielsweise während eines Betriebs des Getriebes auftretenden und insbesondere in axialer Richtung der Welle wirkenden Kräften, welche auch als Betriebskräfte bezeichnet werden, entgegen beziehungsweise die Betriebskräfte wirken der Vorspannung entgegen, wodurch die Vorspannung beispielsweise zumindest teilweise, insbesondere zumindest überwiegend oder vollständig, aufgehoben wird. In der Folge kann das Getriebe durch die Vorspannung der Wände zumindest im Hinblick auf die Wände und die Deckel zumindest nahezu axialkraftfrei betrieben werden. In der Folge kann das Getriebe, insbesondere die Wände beziehungsweise das Getriebegehäuse und die Deckel, besonders filigran und somit gewichts- und kostengünstig ausgeführt werden, sodass die Kosten und das Gewicht des erfindungsgemäßen Getriebes in einem besonders geringen Rahmen gehalten werden können. Des Weiteren können die Welle und über die Welle das Zahnrad mittels der Lagereinrichtung besonders vorteilhaft und insbesondere besonders bauraum- und kosten- sowie gewichtsgünstig an dem Getriebegehäuse gelagert werden. Außerdem können die Lagereinrichtungen besonders einfach und somit zeit- und kostengünstig montiert werden, indem beispielsweise die Lagereinrichtungen von außerhalb des Getriebegehäuses, das heißt von der Umgebung aus in den Öffnungen angeordnet werden, insbesondere in einem Zustand, in welchem die Deckel von dem Getriebegehäuse gelöst und somit noch nicht an dem Getriebegehäuse gehalten sind.

Zudem ist das Koppelelement, insbesondere vollständig, außerhalb der Welle und in radialer Richtung der Welle neben der Welle angeordnet. Dadurch können die Wände besonders vorteilhaft vorgespannt werden, sodass ein besonders belastungsarmer Betrieb des Getriebes realisiert werden kann.

Bei einer besonders vorteilhaften Ausführungsform der Erfindung ist das Koppelelement zumindest in unvorgespanntem Zustand der Wände sowie vorzugsweise zusätzlich in vorgespanntem Zustand der Wände und in axialer Richtung der Welle kürzer als ein in axialer Richtung verlaufender Abstand zwischen den Wänden und/oder den Deckeln, insbesondere zwischen den einander zugewandten und dem Innenraum zugewandten Seiten der Wände beziehungsweise zwischen in axialer Richtung der Welle einander zugewandten Seiten der Deckel. Dies bedeutet, dass beispielsweise in unverspanntem beziehungsweise unvorgespanntem Zustand der Wände, das heißt dann, wenn die Wände noch nicht mittels der Schraubelemente vorgespannt sind, das Koppelelement, insbesondere wenigstens ein Ende des Koppelelements, in axialer Richtung der Welle von wenigstens einer der Wände beziehungsweise von wenigstens einem der Deckel noch beabstandet ist. Hierdurch lässt es das Koppelelement zu, dass die Wände durch Verschrauben der Schraubelemente mit dem Koppelelement in axialer Richtung aufeinander zu bewegt und dadurch in axialer Richtung der Welle vorgespannt werden, da sich beispielsweise die Wände beziehungsweise die Deckel zumindest zunächst nicht in axialer Richtung der Welle über das Koppelelement aneinander abstützen können. Hierdurch kann beispielsweise die Vorspannung der Wände bedarfsgerecht eingestellt werden, wodurch ein besonders axialkraftarmer oder gar axialkraftfreier Betrieb des Getriebes zumindest im Hinblick auf die Wände realisierbar ist. Insbesondere können das Getriebegehäuse und somit das Getriebe insgesamt besonders gewichts-, bauraum- und kostengünstig ausgeführt werden.

Eine weitere Ausführungsform zeichnet sich dadurch aus, dass die Schraubelemente innerhalb des Koppelelements mit dem Koppelelement verschraubt sind. Hierzu ist das Koppelelement beispielsweise als ein Rohr ausgebildet, innerhalb welchem die Schraubelemente zumindest teilweise aufgenommen und mit dem Koppelelement verschraubt sind. Das beispielsweise als Schraube ausgebildete Koppelelement weist beispielsweise ein jeweiliges Außengewinde auf, wobei das Koppelelement beispielsweise ein jeweiliges, mit dem jeweiligen Außengewinde korrespondierendes Innengewinde aufweist. Dabei ist beispielsweise das jeweilige Schraubelement über sein Außengewinde und das korrespondierende Innengewinde mit dem Koppelelement verschraubt. Hierdurch können das Gewicht und die Kosten des Getriebes besonders gering gehalten werden.

Um die Teileanzahl und somit die Kosten und das Gewicht besonders gering halten zu können, ist es in weiterer Ausgestaltung der Erfindung vorgesehen, dass das separat von den Deckeln, separat von dem Getriebegehäuse und separat von den Schraubelementen ausgebildete Koppelelement einstückig ausgebildet ist.

Eine weitere Ausführungsform zeichnet sich dadurch aus, dass die jeweilige Lagereinrichtung in radialer Richtung der Welle unter Umgehung der Deckel an dem Getriebegehäuse, insbesondere direkt, abgestützt ist. Insbesondere ist es vorzugsweise vorgesehen, dass die jeweilige Lagereinrichtung in radialer Richtung der Welle unter Umgehung der Deckel an einer jeweiligen, die jeweilige Öffnung, insbesondere direkt, begrenzende, innenumfangsseitigen Mantelfläche der jeweiligen Wand, insbesondere direkt, abgestützt ist. Unter dem Merkmal, dass die Lagereinrichtung unter Umgehung der Deckel an dem Getriebegehäuse abgestützt ist, kann insbesondere verstanden werden, dass beispielsweise in radialer Richtung von der jeweiligen Lagereinrichtung auf die jeweilige Wand wirkende Kräfte von der jeweiligen Lagereinrichtung an die jeweilige Wand übertragen werden und dabei die Deckel umgehen, das heißt auf ihrem Weg von der jeweiligen Lagereinrichtung zu der jeweiligen Wand nicht über die Deckel beziehungsweise durch die Deckel fließen. Hierdurch können die Teileanzahl und somit das Gewicht, der Bauraumbedarf und die Kosten besonders gering gehalten werden.

Um eine besonders belastungsarme Lagerung der Welle realisieren und in der Folge die Kosten und das Gewicht des Getriebes besonders gering halten zu können, ist es in weiterer Ausgestaltung der Erfindung vorgesehen, dass die Lagereinrichtungen als Wälzlager, insbesondere als Kegelrollenlager, in X-Anordnung ausgebildet sind.

Eine weitere Ausführungsform zeichnet sich dadurch aus, dass das Zahnrad als ein Stirnrad ausgebildet ist. Hierdurch können die Kosten und das Gewicht besonders gering gehalten werden.

In weiterer, vorteilhafter Ausgestaltung der Erfindung ist die jeweilige Lagereinrichtung an dem jeweiligen Deckel in axialer Richtung der Welle unter Vermittlung eines jeweiligen, separat von der jeweiligen Lagereinrichtung und separat von dem jeweiligen Deckel ausgebildeten Abstützelements abgestützt. Hierdurch kann ein definierter und belastungsarmer Betrieb realisiert werden, sodass das Gewicht und die Kosten des Getriebes besonders gering gehalten werden können.

Dabei hat es sich als besonders vorteilhaft gezeigt, wenn die Wände mit einer in axialer Richtung wirkenden Vorspannkraft vorgespannt sind, die einer Summe aus einer während eines Betriebs des Getriebes auftretenden Axialkraft der Verzahnung und einer Differenz von während des Betriebs induzierten Axialkräften der Lagereinrichtungen entspricht. Dadurch kann zumindest im Hinblick auf die Wände ein zumindest nahezu axialkraftfreier Betrieb des Getriebes realisiert werden. Hierunter kann insbesondere verstanden werden, dass während des Betriebs des Getriebes zumindest nahezu keine Axialkräfte auf die Wände wirken, sodass das Getriebegehäuse besonders filigran und somit besonders kosten- und gewichtsgünstig ausgeführt werden kann.

Weitere Vorteile und Einzelheiten der Erfindung ergeben sich aus der nachfolgenden Beschreibung eines bevorzugten Ausführungsbeispiels sowie anhand der Zeichnung.

Die Zeichnung zeigt in:

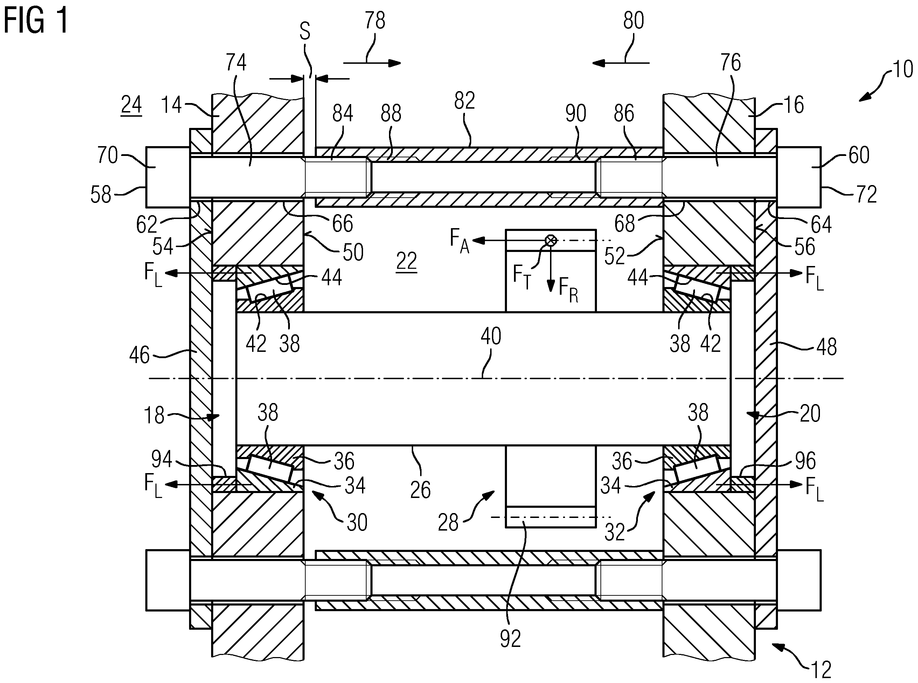

- FIG 1: ausschnittsweise eine schematische und teilweise geschnittene Seitenansicht einer ersten Ausführungsform eines erfindungsgemäßen Getriebes; und

In der FIG sind gleiche oder funktionsgleiche Elemente mit gleichen Bezugszeichen versehen.

FIG 1 zeigt ausschnittsweise in einer schematischen und teilweise geschnittenen Seitenansicht ein Getriebe 10, welches beispielsweise in Maschinen, Anlagen und/oder anderweitigen Einrichtungen zum Einsatz kommen und somit verwendet werden kann. Beispielsweise wird das Getriebe 10 zur Drehmoment- und/oder Drehzahlwandlung genutzt. Das Getriebe 10 weist ein in FIG 1 ausschnittsweise gezeigtes Getriebegehäuse 12 auf, welches einfach auch als Gehäuse bezeichnet wird. Dabei zeigt FIG 1 eine erste Ausführungsform des Getriebes 10. Das Getriebegehäuse 12 weist eine erste Wand 14 und ein der ersten Wand 14 gegenüberliegende zweite Wand 16 auf, wobei die Wände 14 und 16 auch als Gehäusewände bezeichnet werden. Das Getriebe 10 weist darüber hinaus eine erste Öffnung 18 auf, welche in der ersten Wand 14 ausgebildet ist. In der zweiten Wand 16 ist eine zweite Öffnung 20 des Getriebes 10 ausgebildet. Dabei ist aus FIG 1 erkennbar, dass die Öffnungen 18 und 20 als Durchgangsöffnungen ausgebildet sind und somit an sich, das heißt für sich alleine betrachtet, einerseits in einen auch als Aufnahmeraum oder Aufnahmebereich bezeichneten und durch das Getriebegehäuse 12 zumindest teilweise, insbesondere zumindest überwiegend oder vollständig, begrenzten Innenraum 22 des Getriebes 10 und andererseits in oder an eine Umgebung 24 des Getriebegehäuses 12, insbesondere des Getriebes 10, münden. Da die Wände 14 und 16 einander gegenüberliegen, und da die Öffnungen 18 und 20 in den Wänden 14 und 16 ausgebildet sind, liegen auch die Öffnungen 18 und 20 einander gegenüber. Die Öffnungen 18 und 20 überlappen beziehungsweise überdecken sich gegenseitig beispielsweise. Insbesondere ist es denkbar, dass die Öffnungen 18 und 20 miteinander fluchten und/oder koaxial zueinander angeordnet sind. Die jeweilige Öffnung 18 beziehungsweise 20 ist beispielsweise innenumfangsseitig rund, insbesondere kreisrund, ausgebildet.

Das Getriebe 10 weist darüber hinaus wenigstens eine zumindest teilweise in dem Innenraum 22 und somit in dem Getriebegehäuse 12 angeordnete Welle 26 auf. Außerdem umfasst das Getriebe 10 wenigstens ein beispielsweise als Stirnrad ausgebildetes Zahnrad 28, welches drehfest mit der Welle 26 verbunden ist. Das Getriebe 10 umfasst darüber hinaus eine erste Lagereinrichtung 30, welche zumindest teilweise, insbesondere zumindest überwiegend oder vollständig, in der ersten Öffnung 18 angeordnet ist. Des Weiteren umfasst das Getriebe 10 eine zweite Lagereinrichtung 32, welche zumindest teilweise, insbesondere zumindest überwiegend oder vollständig, in der zweiten Öffnung 20 angeordnet ist. Bei der ersten Ausführungsform ist die jeweilige Lagereinrichtung 30 beziehungsweise 32 als ein Wälzlager und dabei als ein Kegelrollenlager ausgebildet, wobei die Lagereinrichtungen 30 und 32 bei der ersten Ausführungsform als Kegelrollenlager in X-Anordnung ausgebildet und angeordnet sind.

Die jeweilige Lagereinrichtung 30 beziehungsweise 32 ist separat von dem Getriebegehäuse 12 ausgebildet und weist einen separat von dem Getriebegehäuse 12 ausgebildeten und auch als Lageraußenring bezeichneten Außenring 34 auf. Außerdem umfasst die jeweilige Lagereinrichtung 30 beziehungsweise 32 einen auch als Lagerinnenring bezeichneten Innenring 36, welcher separat von dem Außenring 34 ausgebildet ist. Außerdem ist der Innenring 36 separat von der Welle 26 ausgebildet. Außerdem umfasst die jeweilige Lagereinrichtung 30 beziehungsweise 32 Wälzkörper 38, welche vorliegend als Rollen, insbesondere als Kegelrollen, ausgebildet sind. Über die Lagereinrichtungen 30 und 32 ist die Welle 26 drehbar an den Wänden 14 und 16 und somit an dem Getriebegehäuse 12 gelagert, sodass die Welle 26 und mit dieser das Zahnrad 28 um eine Drehachse 40 relativ zu dem Getriebegehäuse 12 und somit relativ zu den Wänden 14 und 16 drehbar sind. Insgesamt ist erkennbar, dass das Zahnrad 28 über die Welle 26 und über die Lagereinrichtungen 30 und 32 drehbar an den Wänden 14 und 16 und somit an dem Getriebegehäuse 12 gelagert ist.

Der jeweilige Innenring 36 bildet eine jeweilige erste Laufbahn 42 für die Wälzkörper 38, wobei der jeweilige Außenring 34 eine jeweilige Laufbahn 44 für die Wälzkörper 38 bildet. Der Innenring 36 ist beispielsweise mit der Welle 26 mitdrehbar beziehungsweise drehfest mit der Welle 26 verbunden. Der jeweilige Außenring 34 ist beispielsweise drehfest an der jeweiligen Wand 14 beziehungsweise 16 festgelegt, sodass um die Drehachse 40 verlaufende Relativdrehungen zwischen dem jeweiligen Außenring 34 und der jeweiligen Wand 14 beziehungsweise 16 unterbleiben. Drehen sich nun die Welle 26 und mit dieser die Innenringe 36 und das Zahnrad 28 um die Drehachse 40 relativ zu den Wänden 14 und 16 und somit relativ zu den Außenringen 34, so wälzen die Wälzkörper 38 an den Laufbahnen 42 und 44 ab. Hierdurch kann eine reibungs- und somit verlustarme Lagerung der Welle 26 an den Wänden 14 und 16 und somit an dem Getriebegehäuse 12 gewährleistet werden.

Der ersten Wand 14 und der ersten Öffnung 18 ist ein separat von den Wänden 14 und 16 und separat von der Welle 26 ausgebildeter erster Deckel 46 zugeordnet, welcher auch als erster Lagerdeckel oder erster Gehäusedeckel bezeichnet wird. Mittels des ersten Deckels 46 ist die erste Öffnung 18, insbesondere zur Umgebung 24 hin, überdeckt und somit verschlossen. Dabei ist der erste Deckel 46, insbesondere reversibel lösbar, an dem Getriebegehäuse 12, insbesondere an der Wand 14, gehalten.

Der zweiten Wand 16 und der zweiten Öffnung 20 ist ein zweiter Deckel 48 zugeordnet, welcher separat von der Welle 26 und separat von den Wänden 14 und 16 ausgebildet ist. Mittels des zweiten Deckels 48 ist die zweite Öffnung 20, insbesondere zu der Umgebung 24 hin, überdeckt und somit verschlossen. Dabei ist der Deckel 48 reversibel lösbar an der Wand 16 gehalten. Aus FIG 1 ist erkennbar, dass die jeweilige Wand 14 beziehungsweise 16 eine in axialer Richtung der Welle 26 dem Innenraum 22 und dabei der jeweils anderen Wand 16 beziehungsweise 14 zugewandte Innenseite 50 beziehungsweise 52 aufweist. Außerdem weist die jeweilige Wand 14 beziehungsweise 16 eine der jeweiligen Innenseite 50 beziehungsweise 52 und somit dem Innenraum 22 und der jeweils anderen Wand 16 beziehungsweise 14 in axialer Richtung der Welle 26 abgewandte Außenseite 54 beziehungsweise 56 auf. Die Außenseite 54 der Wand 14 wird auch als erste Seite bezeichnet, wobei die Außenseite 56 der Wand 16 auch als zweite Seite bezeichnet wird. Die Innenseite 50 der Wand 14 wird auch als dritte Seite bezeichnet, wobei die Innenseite 52 der Wand 16 auch als vierte Seite bezeichnet wird. Der Deckel 46 ist dabei an der Umgebung 24 und dabei auf der Außenseite 54 angeordnet und, insbesondere direkt, in axialer Richtung der Welle 26 an der Außenseite 54 abgestützt. Dementsprechend ist der Deckel 48 an der Umgebung 24 und somit außerhalb des Getriebegehäuses 12 angeordnet, wobei der Deckel 48 auf der Außenseite 56 angeordnet und in axialer Richtung der Welle 26 zumindest mittelbar, insbesondere direkt, an der Außenseite 56 abgestützt ist. Außerdem ist aus FIG 1 erkennbar, dass die Wände 14 und 16 und somit die Öffnungen 18 und 20 in axialer Richtung der Welle 26 einander gegenüberliegen.

Dem Deckel 46 ist ein erstes Schraubelement 58 zugeordnet, mittels welchem der Deckel 46, insbesondere reversibel lösbar, an der Wand 14 gehalten ist. Dabei ist der Deckel 46 mittels des Schraubelements 58 entlang der axialen Richtung der Welle 26 in zumindest mittelbarer, insbesondere direkter, Stützanlage mit der Außenseite 54 gehalten. Dem Deckel 48 ist ein zweites Schraubelement 60 zugeordnet, mittels welchem der Deckel 48, insbesondere reversibel lösbar, an der Wand 16 gehalten ist. Dabei ist der Deckel 48 in axialer Richtung der Welle 26 mittels des Schraubelements 60 in zumindest mittelbarer, insbesondere direkter, Stützanlage mit der Außenseite 56 gehalten. Der jeweilige Deckel 46 beziehungsweise 48 weist eine Durchgangsöffnung 62 beziehungsweise 64 auf, durch welche das jeweilige Schraubelement 58 beziehungsweise 60 hindurchgesteckt ist. Mit anderen Worten durchdringt das jeweilige Schraubelement 58 beziehungsweise 60 die jeweilige Durchgangsöffnung 62 beziehungsweise 64. Die jeweilige Durchgangsöffnung 62 beziehungsweise 64 ist vorzugsweise gewindefrei angeordnet, sodass in der jeweiligen Durchgangsöffnung 62 beziehungsweise 64 kein Gewinde angeordnet ist.

Außerdem weist die Wand 14 eine Durchgangsöffnung 66 auf, welche vorzugsweise gewindefrei ist. Dementsprechend weist die Wand 16 eine Durchgangsöffnung 68 auf, welche vorzugweise gewindefrei ist. Dabei durchdringt das Schraubelement 58 die Durchgangsöffnung 66, und das Schraubelement 60 durchdringt die Durchgangsöffnung 68. Aus FIG 1 ist erkennbar, dass die Schraubelemente 58 und 60 jeweils teilweise in der Umgebung 24, teilweise in dem Innenraum 22, teilweise in der Durchgangsöffnung 66 beziehungsweise 68 und somit in der jeweiligen Wand 14 beziehungsweise 16 und teilweise in der jeweiligen Durchgangsöffnung 62 beziehungsweise 64 und somit teilweise in dem jeweiligen Deckel 46 beziehungsweise 48 aufgenommen ist.

Das jeweilige Schraubelement 58 beziehungsweise 60 ist als eine Schraube ausgebildet, welche einen jeweiligen Schraubenkopf 70 beziehungsweise 72 und einen jeweiligen Schraubenschaft 74 beziehungsweise 76 aufweist. Vorzugsweise ist der Schraubenkopf 70 beziehungsweise 72 mit dem Schraubenschaft 74 beziehungsweise 76 verbunden, insbesondere einstückig ausgebildet. Der jeweilige Schraubenkopf 70 beziehungsweise 72 weist einen größeren Außenumfang, insbesondere einen größeren Außendurchmesser, als der jeweilige Schraubenschaft 74 beziehungsweise 76 auf. Das Schraubelement 58 ist in eine mit der axialen Richtung der Welle 26 zusammenfallende beziehungsweise parallel zur axialen Richtung verlaufende und in FIG 1 durch einen Pfeil 78 veranschaulichte erste Richtung zumindest mittelbar, insbesondere direkt, an dem Deckel 46 und über den Deckel 46 an der Wand 14, insbesondere an der Außenseite 54, abgestützt, wobei die erste Richtung der Wand 16 zugewandt ist beziehungsweise in Richtung der Wand 16 verläuft oder zur Wand 16 zeigt. Dementsprechend ist das Schraubelement 60 über seinen Schraubenkopf 72 in eine der ersten Richtung entgegengesetzte, in FIG 1 durch einen Pfeil 80 veranschaulichte und mit der axialen Richtung der Welle 26 zusammenfallende beziehungsweise parallel zur Welle 26 verlaufende zweite Richtung zumindest mittelbar, insbesondere direkt, an dem Deckel 48 und über den Deckel 48 an der Wand 16, insbesondere an der Außenseite 56, abgestützt. Dabei verläuft die zweite Richtung in Richtung der Wand 14 beziehungsweise die zweite Richtung weist oder zeigt zur Wand 14 hin beziehungsweise in Richtung der Wand 14. Die Schraubelemente 58 und 60 sind beispielsweise koaxial zueinander angeordnet.

Um nun zumindest im Hinblick auf die Wände 14 und 16 einen besonders belastungsarmen Betrieb des Getriebes 10 realisieren und in der Folge das Getriebegehäuse 12 besonders filigran und somit gewichts- und kostengünstig ausführen zu können, weist das Getriebe 10 wenigstens ein den Schraubelementen 58 und 60 gemeinsames Koppelelement 82 auf, welches in axialer Richtung der Welle 26 zwischen den Wänden 14 und 16, insbesondere zwischen den Innenseiten 50 und 52, angeordnet ist. Dabei sind zum Halten der Deckel 46 und 48 an den Wänden 14 und 16 und somit an dem Getriebegehäuse 12 Schraubelemente 58 und 60 mit dem Koppelelement 72 verschraubt, insbesondere unter Umgehung der Wände 14 und 16 und der Deckel 46 und 48. Dies bedeutet, dass die Schraubelemente 58 und 60 nicht mit den Deckeln 46 und 48 und nicht mit den Wänden 14 und 18 verschraubt sind, sondern die Schraubelemente 58 und 60 sind jeweils mit dem Koppelelement 82 verschraubt. Hierdurch sind die Wände 14 und 16 in axialer Richtung der Welle 26 miteinander verspannt und somit vorgespannt. Bei der in FIG 1 gezeigten ersten Ausführungsform ist das Koppelelement 82 als ein Rohr ausgebildet, innerhalb welchem die Schraubelemente 58 und 60 mit dem Koppelelement 82 verschraubt sind.

Das Schraubelement 58, insbesondere der Schraubenschaft 74, weist beispielsweise ein erstes Gewinde in Form eines ersten Außengewindes 84 auf. Das Schraubelement 60, insbesondere der Schraubenschaft 76, weist beispielsweise ein zweites Gewinde, insbesondere ein zweites Außengewinde 86, auf. Das Koppelelement 82 weist beispielsweise ein drittes Gewinde in Form eines mit dem Außengewinde 84 korrespondierenden ersten Innengewindes 88 auf, wobei das Schraubelement 58 über das Außengewinde 84 und das Innengewinde 88 mit dem Koppelelement 82 verschraubt und dabei in das Koppelelement 82 eingeschraubt ist. Wieder mit anderen Worten ausgedrückt ist das Schraubelement 58 beziehungsweise das Außengewinde 84 in das korrespondierende Innengewinde 88 und somit in das Koppelelement 82 eingeschraubt, wodurch das Schraubelement 58 mit dem Koppelelement 82 verschraubt ist.

Des Weiteren weist beispielsweise das Koppelelement 82 ein viertes Gewinde in Form eines mit dem Außengewinde 86 korrespondierenden zweiten Innengewindes 90 auf, wobei das Schraubelement 60 über das Außengewinde 86 und das Innengewinde 90 mit dem Koppelelement 82 verschraubt ist. Mit anderen Worten ist das Außengewinde 86 in das korrespondierende Innengewinde 90 eingeschraubt, wodurch das Schraubelement 60 in das Koppelelement 82 eingeschraubt und somit mit dem Koppelelement 82 verschraubt ist.

Aus FIG 1 ist ferner erkennbar, dass das Koppelelement 82 zumindest in unvorgespanntem Zustand der Wände 14 und 16, das heißt in einem Zustand, in welchem die Wände 14 und 16 nicht mittels der Schraubelemente 58 und 60 vorgespannt sind, in axialer Richtung der Welle 26 kürzer ist als ein in axialer Richtung der Welle 26 verlaufender Abstand zwischen den Wänden 14 und 16, insbesondere zwischen den Innenseiten 50 und 52. Somit ist zumindest in dem unvorgespannten Zustand ein Spalt S in axialer Richtung der Welle 26 zwischen dem Koppelelement 82 und beispielsweise der Innenseite 50 vorgesehen. Werden ausgehend von dem unvorgespannten Zustand die Schraubelemente 58 und 60 mit dem Koppelelement 82 verschraubt, wodurch die Wände 14 und 16 vorgespannt werden, so wird dadurch beispielsweise der Spalt S zumindest verkleinert oder gar aufgehoben. Durch das Vorspannen der Wände 14 und 16 werden diese beispielsweise in axialer Richtung der Welle 26 ein Stück aufeinander zu bewegt und dadurch vorgespannt. Dies wird durch das Koppelelement 82 zugelassen, da dessen in axialer Richtung der Welle 26 verlaufende Länge geringer als der in axialer Richtung verlaufende Abstand zwischen den Innenseiten 50 und 52 ist, zumindest in dem unvorgespannten Zustand. Auch in vorgespanntem Zustand der Wände 14 und 16 kann das Koppelelement 82 in axialer Richtung der Welle 26 noch kürzer sein als der Abstand zwischen den Innenseiten 50 und 52, sodass auch in vorgespanntem Zustand der Wände 14 und 16 ein zweiter Spalt in axialer Richtung der Welle 26 zwischen dem Koppelelement 82 und beispielsweise der Innenseite 50 vorgesehen ist, wobei der zweite Spalt beispielsweise geringer als der erste Spalt ist.

Das Zahnrad 28 ist beispielsweise als ein Stirnrad ausgebildet. Dabei weist das Zahnrad 28 eine Verzahnung 92 auf, welche beispielsweise als eine Schrägverzahnung ausgebildet ist. Zumindest während eines Betriebs des Getriebes 10 kämmt das Zahnrad 28 über seine Verzahnung 92 mit einem in den FIG nicht dargestellten korrespondierenden weiteren Zahnrad, insbesondere des Getriebes 10. Daraus resultieren in FIG 1 besonders schematisch dargestellte Verzahnungskräfte F_{A}, F_{T} und F_{R} der Verzahnung 92. Mit anderen Worten treten während des Betriebs an der Verzahnung 92 die Verzahnungskräfte F_{A}, F_{T} und F_{R} auf. Die Verzahnungskraft F_{A} ist eine Axialkraft, da die Verzahnungskraft F_{A} in axialer Richtung der Welle 26 wirkt.

Außerdem sind in FIG 1 in axialer Richtung der Welle 26 wirkende Lagerkräfte der jeweiligen Lagereinrichtung 30 beziehungsweise 32 mit F_{L} bezeichnet. Auch die jeweilige Lagerkraft F_{L} ist eine Axialkraft, welche in axialer Richtung der Welle 26 wirkt. Die Lagerkräfte F_{L} sind beispielsweise induzierte Lageraxialkräfte, welche von der jeweiligen Lagereinrichtung 30 beziehungsweise 32 auf den jeweiligen Deckel 46 beziehungsweise 48 wirken. Hierzu ist die jeweilige Lagereinrichtung 30 beziehungsweise 32 über ein jeweiliges, separat von der jeweiligen Lagereinrichtung 30 beziehungsweise 32 und separat von den Deckeln 46 und 48 ausgebildetes Abstützelement 94 beziehungsweise 96 in axialer Richtung der Welle 26 an dem jeweiligen Deckel 46 beziehungsweise 48 abgestützt. Dies bedeutet, dass das jeweilige, beispielsweise als ein Ring ausgebildete Abstützelement 94 beziehungsweise 96 in axialer Richtung der Welle 26 zwischen der jeweiligen Lagereinrichtung 30 beziehungsweise 32 und über den jeweiligen Deckel 46 beziehungsweise 48 angeordnet ist.

Insgesamt ist erkennbar, dass mittels der Schraubelemente 58 und 60 und mittels des Koppelelements 82 wenigstens eine in axialer Richtung der Welle 26 wirkende Vorspannkraft bewirkt wird, mittels welcher die Wände 14 und 16 in axialer Richtung der Welle 26 miteinander verspannt und somit vorgespannt sind. Die Verzahnungskraft F_{A} und die jeweilige Lagerkraft F_{L} sind Axialkräfte, welche auch als Betriebskräfte oder Axial-Betriebskräfte bezeichnet werden. Die Betriebskräfte treten während des Betriebs des Getriebes 10 auf. Dabei sind die Vorspannkraft und somit die Vorspannung der Wände 14 und 16 vorzugsweise derart eingestellt, dass die Vorspannkraft und somit die Vorspannung den Betriebskräften entgegenwirken beziehungsweise umgekehrt, insbesondere derart, dass die Vorspannung durch die Betriebskräfte zumindest teilweise, insbesondere zumindest überwiegend oder vollständig, aufgehoben werden. Hierdurch sind die Wände 14 und 16 und/oder die Deckel 46 und 48 während des Betriebs zumindest nahezu axialkraftfrei, sodass zumindest im Hinblick auf die Wände 14 und 16 und/oder die Deckel 46 und 48 ein besonders belastungsarmer Betrieb des Getriebes 10 realisiert werden kann. In der Folge kann das Getriebe 10 besonders filigran und somit kosten- und gewichtsgünstig ausgeführt werden.

Dem Getriebe 10 und insbesondere dessen Ausgestaltung liegen insbesondere die Erkenntnisse zugrunde, dass Wellen in Stirnradgetrieben beispielsweise durch Kegelrollenlager in X-Anordnung gelagert werden können. Da beispielsweise das Zahnrad 28 als ein Stirnrad ausgebildet ist, ist das Getriebe 10 beispielsweise als ein Stirnradgetriebe ausgebildet. Eine Lagerung einer Welle beispielsweise eines Stirnradgetriebes durch Kegelrollenlager in X-Anordnung kann herkömmlicherweise zu nicht unerheblichen Axialkräften führen. Üblicherweise werden die Axialkräfte im Allgemeinen über die Lagerdeckel, die in beziehungsweise an den Gehäusewänden verschraubt sind, in das Gehäuse eingeleitet. In der Folge kommt es zu einer auf das Gehäuse wirkenden Belastung, die zu einer axialen Verformung und einer hohen Beanspruchung des Gehäuses führen kann. Diese Verformung des Gehäuses kann das Tragverhalten der Stirnradstufen beeinflussen. In der Folge ist es üblicherweise vorgesehen, dass das Gehäuse und/oder die Deckel massiv ausgeführt werden, um übermäßige Beanspruchungen und Verformungen zu vermeiden.

Die zuvor genannten Probleme und Nachteile können nun bei dem Getriebe 10 vermieden werden. Dabei werden die Deckel 46 und 48 nicht in den Wänden 14 und 16 verschraubt, sondern in dem beispielsweise als Rohr ausgebildeten Koppelelement 82, welches zwischen den Gehäusewänden liegt beziehungsweise angeordnet ist. Das Koppelelement 82 wird geringfügig kürzer als der Abstand zwischen den Gehäusewänden ausgestaltet. Auf diese Weise können die Wände 14 und 16 axial vorgespannt werden. Diese Konstruktion führt zu einer Aufhebung der durch die Lagereinrichtungen 30 und 32 indizierten Lagerkräfte. Die Vorspannung der Gehäusewände wird vorzugsweise in der Höhe der resultierenden, axialen Verzahnungskraft F_{A} und einer Differenz der induzierten Axial-Lagerkräfte ausgeführt.

Bei der in FIG 1 gezeigten ersten Ausführungsform ist das Koppelelement 82 vollständig außerhalb der Welle 26 und in radialer Richtung der Welle 26 neben der Welle 26 angeordnet. Dabei ist die Welle 26 vorzugsweise als eine Massivwelle ausgebildet.

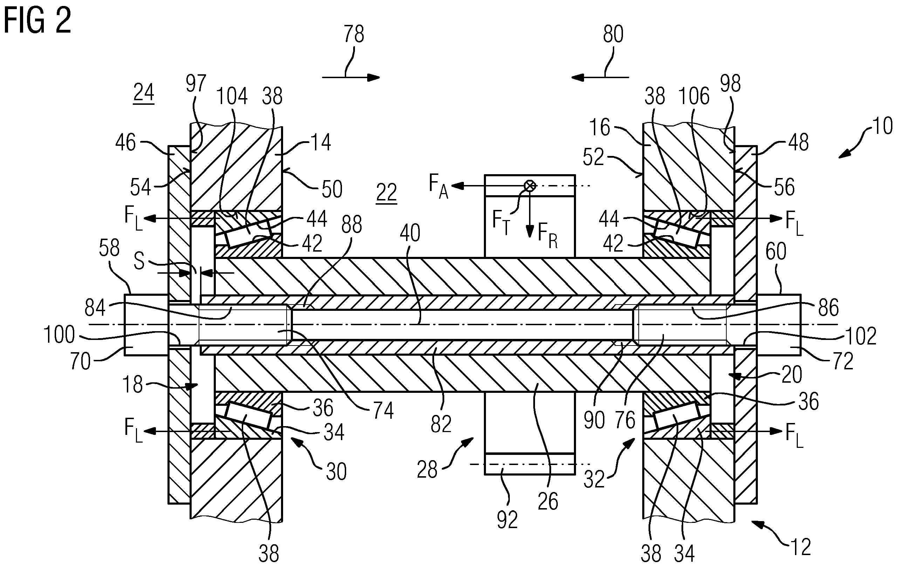

FIG 2 zeigt eine zweite, nicht beanspruchte Ausführungsform des Getriebes 10. Bei der zweiten Ausführungsform ist die Welle 26 als eine Hohlwelle ausgebildet, wobei das vorzugsweise als Rohr ausgebildete Koppelelement 82 zumindest teilweise, insbesondere zumindest überwiegend oder vollständig, in der Hohlwelle aufgenommen ist. Beispielsweise ist die Hohlwelle vollständig von dem Koppelelement 82 durchdrungen.

Auch bei der zweiten Ausführungsform werden die beispielsweise als Lagerdeckel ausgebildeten oder als Lagerdeckel fungierenden Deckel 46 und 48 nicht in den Wänden 14 und 16 verschraubt, sondern in dem beispielsweise als Rohr ausgebildeten Koppelelement 82, welches in axialer Richtung der Welle 26 zwischen den Deckel 46 und 48 liegt, das heißt angeordnet ist. Beispielsweise ist das Koppelelement 82 teilweise in der Öffnung 18 und/oder teilweise in der Öffnung 20 angeordnet. Das Koppelelement 82 ist dabei koaxial zu den Schraubelementen 58 und 60 und koaxial zu der Welle 26 angeordnet. Insbesondere liegt das Koppelelement 82 auf der Drehachse 40 und somit auf einer Achse, insbesondere Mittelachse, der Welle 26.

Aus FIG 2 ist erkennbar, dass der Deckel 48 eine in axialer Richtung der Welle 26 der Wand 14 und dem Innenraum 22 zugewandte und auch als fünfte Seite bezeichnete Innenseite 97 aufweist. Demzufolge weist der Deckel 48 eine in axialer Richtung der Welle 26 dem Innenraum 22 und der Wand 16 zugewandte und auch als sechste Seite bezeichnete Innenseite 98 auf. Dabei ist das Koppelelement 82 zumindest in unvorgespanntem Zustand der Wände 14 und 16 und in axialer Richtung der Welle 26 kürzer als ein in axialer Richtung der Welle 26 verlaufender Abstand zwischen den Deckeln 46 und 48, insbesondere zwischen den Innenseiten 97 und 98. Somit kommt es zu einem Spalt S in axialer Richtung zwischen dem Koppelelement 82 und vorliegend dem Deckel 46 beziehungsweise der Innenseite 97. Auch bei der zweiten Ausführungsform sind die Wände 14 und 16, insbesondere über die beziehungsweise unter Vermittlung der Deckel 48, in axialer Richtung miteinander verspannt beziehungsweise vorgespannt.

Das Schraubelement 58, insbesondere der Schraubenschaft 74, durchdringt bei der zweiten Ausführungsform eine korrespondierende Durchgangsöffnung 100 des Deckels 46. Dementsprechend durchdringt das Schraubelement 60, insbesondere der Schraubenschaft 76, eine korrespondierende Durchgangsöffnung 102 des Deckels 48. Bei der zweiten Ausführungsform sind die Deckel 46 und 48 mittels der Schraubelemente 58 und 60 und mittels des Koppelelements 82 in axialer Richtung der Welle 26 miteinander verspannt und dabei in axialer Richtung der Welle 26 aufeinander zu verspannt, wodurch die Wände 14 und 16 in axialer Richtung der Welle 26 aufeinander zu gespannt sind. Somit sind die Wände 14 und 16 auch bei der zweiten Ausführungsform in axialer Richtung vorgespannt, sodass ein besonders belastungsarmer Betrieb des Getriebes 10 realisiert werden kann. Dabei sind die Durchgangsöffnungen 100 und 102 gewindefrei, sodass in den Durchgangsöffnungen 100 und 102 kein Gewinde angeordnet ist. Auch bei der zweiten Ausführungsform sind die Schraubelemente 58 und 60 nicht mit den Deckeln 46 und 48, sondern mit dem Koppelelement 82 verschraubt und dabei in das Koppelelement 82 eingeschraubt.

Außerdem ist die jeweilige Lagereinrichtung 30 beziehungsweise 32 in radialer Richtung der Welle 26 unter Umgehung der Deckel 46 und 48 an dem Getriebegehäuse 12, insbesondere an der jeweiligen Wand 14 beziehungsweise 16, insbesondere direkt, abgestützt. Hierzu ist die Lagereinrichtung 30, insbesondere der Außenring 34 der Lagereinrichtung 30, in radialer Richtung der Welle 26 nach außen hin an der Wand 14, insbesondere an einer innenumfangsseitigen Mantelfläche 104 der Wand 14, insbesondere direkt, abgestützt, wobei die innenumfangsseitige Mantelfläche 104 die Öffnung 18, insbesondere vollständig umlaufend, insbesondere direkt, bildet beziehungsweise begrenzt. Außerdem ist die Lagereinrichtung 32, insbesondere der Außenring 34 der Lagereinrichtung 32, in radialer Richtung der Welle 26 nach außen hin an der Wand 16, insbesondere an einer innenumfangsseitigen Mantelfläche 106 der Wand 16, insbesondere direkt, abgestützt, wobei die innenumfangsseitige Mantelfläche 106 die Öffnung 20, insbesondere vollständig umlaufend, insbesondere direkt, bildet beziehungsweise begrenzt.

Insgesamt ist erkennbar, dass durch die Vorspannung der Wände 14 und 16 das Getriebe 10 in seinem Betrieb zumindest nahezu axialkraftfrei betrieben werden kann, insbesondere zumindest im Hinblick auf die Wände 14 und 16. Hierdurch können eine übermäßige Beanspruchung und Verformung des Getriebegehäuses 12 vermieden werden. Das Tragverhalten der Verzahnung 92 wird somit im Vergleich zu herkömmlichen Lösungen weniger durch eine Nachgiebigkeit des Getriebegehäuses 12 beeinflusst. In der Folge kann das Getriebegehäuse 12 besonders filigran und somit gewichts- und kostengünstig ausgeführt werden.

## Patentansprüche

1. Getriebe (10), mit einem Getriebegehäuse (12), welches eine in einer ersten Wand (14) des Getriebegehäuses (12) ausgebildete erste Öffnung (18) und eine in einer der ersten Wand (14) gegenüberliegenden zweiten Wand (16) des Getriebegehäuses (12) ausgebildete und der ersten Öffnung (18) gegenüberliegende zweite Öffnung (20) aufweist, mit wenigstens einer Welle (26), welche über eine in der ersten Öffnung (18) angeordnete erste Lagereinrichtung (30) und über eine in der zweiten Öffnung (20) angeordnete zweite Lagereinrichtung (32) drehbar an dem Getriebegehäuse (12) gelagert ist, mit einem ersten Deckel (46), mittels welchem die erste Öffnung (18) verschlossen ist, mit einem zweiten Deckel (48), mittels welchem die zweite Öffnung (20) verschlossen ist, mit einem ersten Schraubelement (58), mittels welchem der erste Deckel (46) an dem Getriebegehäuse (12) gehalten ist, mit einem zweiten Schraubelement (60), mittels welchem der zweite Deckel (48) an dem Getriebegehäuse (12) gehalten ist, und mit einem Koppelelement (82), mit welchem zum Halten der Deckel (46, 48) an dem Getriebegehäuse (12) die Schraubelemente (58, 60) verschraubt sind, wodurch die Wände (14, 16) in axialer Richtung der Welle (26) vorgespannt sind, wobei das Koppelelement (82) außerhalb der Welle (26) und in radialer Richtung der Welle (26) neben der Welle (26) angeordnet ist.

2. Getriebe (10) nach Anspruch 1,
wobei das Koppelelement (82) zumindest in unvorgespanntem Zustand der Wände (14, 16) und in axialer Richtung der Welle (26) kürzer ist als ein in axialer Richtung verlaufender Abstand zwischen den Wänden (14) und/oder den Deckeln (46, 48).

3. Getriebe (10) nach Anspruch 1 oder 2,
wobei die Schraubelemente (58, 60) innerhalb des Koppelelements (82) mit dem Koppelelement (82) verschraubt sind.

4. Getriebe (10) nach einem der vorhergehenden Ansprüche, wobei das Koppelelement (82) vollständig außerhalb der Welle (26) angeordnet ist.

5. Getriebe (10) nach einem der vorhergehenden Ansprüche, wobei das Koppelelement (82) einstückig ausgebildet ist.

6. Getriebe (10) nach einem der vorhergehenden Ansprüche, wobei die jeweilige Lagereinrichtung (30, 32) in radialer Richtung der Welle (26) unter Umgehung der Deckel (46, 48) an dem Getriebegehäuse (12), insbesondere direkt, abgestützt ist.

7. Getriebe (10) nach einem der vorhergehenden Ansprüche, wobei die Lagereinrichtungen (30, 32) als Wälzlager, insbesondere als Kegelrollenlager, in X-Anordnung ausgebildet sind.

8. Getriebe (10) nach einem der vorhergehenden Ansprüche, wobei mit der Welle (26) wenigstens ein Zahnrad (28) drehfest verbunden ist, welches als ein Stirnrad ausgebildet ist.

9. Getriebe (10) nach Anspruch 8,
wobei die Wände (14, 16) mit einer in axialer Richtung der Welle (26) wirkenden Vorspannkraft vorgespannt sind, welche einer Summe aus einer während eines Betriebs des Getriebes (10) auftretenden Axialkraft (F_{A}) der Verzahnung (92) und einer Differenz von während des Betriebs induzierten Axialkräften (F_{L}) der Lagereinrichtungen (30, 32) entspricht.

10. Getriebe (10) nach einem der vorhergehenden Ansprüche, wobei die jeweilige Lagereinrichtung (30, 32) an dem jeweiligen Deckel (46, 48) in axialer Richtung der Welle (26) unter Vermittlung eines jeweiligen, separat von der jeweiligen Lagereinrichtung (20, 32) und separat von dem jeweiligen Deckel (46, 48) ausgebildeten Abstützelements (94, 96) abgestützt ist.

## Claims

1. Transmission (10), having a transmission housing (12), which has a first opening (18) formed in a first wall (14) of the transmission housing (12) and a second opening (20) which is formed in a second wall (16) of the transmission housing (12) opposite the first wall (14) and is opposite the first opening (18), having at least one shaft (26), which is mounted rotatably on the transmission housing (12) via a first bearing device (30) arranged in the first opening (18) and via a second bearing device (32) arranged in the second opening (20), having a first cover (46), by means of which the first opening (18) is closed, having a second cover (48), by means of which the second opening (20) is closed, having a first screw element (58), by means of which the first cover (46) is held on the transmission housing (12), having a second screw element (60), by means of which the second cover (48) is held on the transmission housing (12), and having a coupling element (82), to which the screw elements (58, 60) are screwed in order to hold the covers (46, 48) on the transmission housing (12), as a result of which the walls (14, 16) are pretensioned in the axial direction of the shaft (26), wherein the coupling element (82) is arranged outside the shaft (26) and next to the shaft (26) in the radial direction of the shaft (26).

2. Transmission (10) according to Claim 1,
wherein the coupling element (82) at least in the unpretensioned state of the walls (14, 16) and in the axial direction of the shaft (26) is shorter than a distance running in the axial direction between the walls (14) and/or the covers (46, 48).

3. Transmission (10) according to Claim 1 or 2, wherein the screw elements (58, 60) are screwed to the coupling element (82) within the coupling element (82).

4. Transmission (10) according to one of the preceding claims,
wherein the coupling element (82) is arranged completely outside the shaft (26).

5. Transmission (10) according to one of the preceding claims,
wherein the coupling element (82) is formed integrally.

6. Transmission (10) according to one of the preceding claims,
wherein the respective bearing device (30, 32) is supported on the transmission housing (12), in particular directly, in the radial direction of the shaft (26) bypassing the covers (46, 48).

7. Transmission (10) according to one of the preceding claims,
wherein the bearing devices (30, 32) are designed as rolling bearings, in particular as tapered roller bearings, in an X arrangement.

8. Transmission (10) according to one of the preceding claims,
wherein at least one gear wheel (28) which is designed as a spur gear is connected to the shaft (26) for rotation therewith.

9. Transmission (10) according to Claim 8,
wherein the walls (14, 16) are pretensioned by a pretensioning force which acts in the axial direction of the shaft (26) and corresponds to a sum of an axial force (F_{A}) of the toothing (92) that occurs during operation of the transmission (10) and a difference of axial forces (F_{L}) of the bearing devices (30, 32) that are induced during the operation.

10. Transmission (10) according to one of the preceding claims,
wherein the respective bearing device (30, 32) is supported on the respective cover (46, 48) in the axial direction of the shaft (26) by means of a respective supporting element (94, 96) which is formed separately from the respective bearing device (20, 32) and separately from the respective cover (46, 48).

## Revendications

1. Transmission (10), avec un boîtier de transmission (12) qui présente une première ouverture (18) réalisée dans une première paroi (14) du boîtier de transmission (12) et une deuxième ouverture (20) réalisée dans une deuxième paroi (16) du boîtier de transmission (12) située en face de la première paroi (14) et située en face de la première ouverture (18), avec au moins un arbre (26), qui est monté de manière rotative sur le boîtier de transmission (12) par l'intermédiaire d'un premier dispositif de palier (30) agencé dans la première ouverture (18) et par l'intermédiaire d'un deuxième dispositif de palier (32) agencé dans la deuxième ouverture (20), avec un premier couvercle (46), au moyen duquel la première ouverture (18) est fermée, avec un deuxième couvercle (48), au moyen duquel la deuxième ouverture (20) est fermée, avec un premier élément à vis (58), au moyen duquel le premier couvercle (46) est maintenu sur le boîtier de transmission (12), avec un deuxième élément à vis (60), au moyen duquel le deuxième couvercle (48) est maintenu sur le boîtier de transmission (12), et avec un élément de couplage (82) avec lequel les éléments de vis (58, 60) sont vissés pour maintenir les couvercles (46, 48) sur le boîtier de transmission (12), moyennant quoi les parois (14, 16) sont précontraintes dans la direction axiale de l'arbre (26), l'élément de couplage (82) étant agencé à l'extérieur de l'arbre (26) et à côté de l'arbre (26) dans la direction radiale de l'arbre (26).

2. Transmission (10) selon la revendication 1, dans laquelle l'élément de couplage (82) est plus court qu'une distance s'étendant dans la direction axiale entre les parois (14) et/ou les couvercles (46, 48), au moins à l'état non précontraint des parois (14, 16) et dans la direction axiale de l'arbre (26).

3. Transmission (10) selon la revendication 1 ou 2, dans laquelle les éléments de vis (58, 60) sont vissés à l'intérieur de l'élément de couplage (82) avec l'élément de couplage (82).

4. Transmission (10) selon l'une quelconque des revendications précédentes, dans laquelle l'élément de couplage (82) est entièrement agencé à l'extérieur de l'arbre (26).

5. Transmission (10) selon l'une quelconque des revendications précédentes, dans laquelle l'élément de couplage (82) est réalisé en une seule pièce.

6. Transmission (10) selon l'une quelconque des revendications précédentes, dans laquelle le dispositif de palier respectif (30, 32) est supporté, notamment directement, dans la direction radiale de l'arbre (26) en contournant les couvercles (46, 48) sur le boîtier de transmission (12).

7. Transmission (10) selon l'une quelconque des revendications précédentes, dans laquelle les dispositifs de palier (30, 32) sont réalisés sous forme de paliers à roulement, notamment sous forme de paliers à rouleaux coniques, agencés en X.

8. Transmission (10) selon l'une quelconque des revendications précédentes, dans laquelle au moins une roue dentée (28), qui est réalisée sous la forme d'une roue droite, est reliée à l'arbre (26) de manière immobile en rotation.

9. Transmission (10) selon la revendication 8, dans laquelle les parois (14, 16) sont précontraintes avec une force de précontrainte agissant dans la direction axiale de l'arbre (26), qui correspond à une somme d'une force axiale (F_{A}) de la denture (92) apparaissant pendant le fonctionnement de la transmission (10) et d'une différence de forces axiales (F_{L}) des dispositifs de palier (30, 32) induites pendant le fonctionnement.

10. Transmission (10) selon l'une quelconque des revendications précédentes, dans laquelle chaque dispositif de palier (30, 32) est supporté sur le couvercle (46, 48) respectif dans la direction axiale de l'arbre (26) par l'intermédiaire d'un élément de support (94, 96) respectif réalisé séparément du dispositif de palier (20, 32) respectif et séparément du couvercle (46, 48) respectif.
